# EUROPÄISCHE PATENTSCHRIFT

(11) **EP 1 675 249 B1**
(45) Veröffentlichungstag und Bekanntmachung des Hinweises auf die Patenterteilung: **12.07.2017**
(21) Anmeldenummer: 06004796.6
(22) Anmeldetag: 18.05.2000
(51) Int. Cl.: H02K 5/22, H02K 11/04

(54) **Elektromotor**
Electric motor
Moteur électrique

(30) Priorität: 10.06.1999 DE 19926542
(43) Veröffentlichungstag der Anmeldung: 28.06.2006
(62) Teilanmeldung aus: 00110602.0
(73) Patentinhaber: SEW-EURODRIVE GmbH & Co. KG, 76646 Bruchsal (DE)
(72) Erfinder: Dietz, Gregor, 76694 Forst (DE); Mack, Frank-Josef, 76275 Ettlingen (DE)

(56) Entgegenhaltungen:
- EP-A- 0 376 530
- EP-A1- 0 351 272
- EP-A1- 0 575 023
- WO-A-98/35424
- DE-A1- 19 714 784
- DE-U- 7 416 469
- DE-U1- 29 723 145
- US-A- 5 038 088
- US-A- 5 331 239
- US-A- 5 521 785
- US-A- 5 825 107

## Beschreibung

Die Erfindung betrifft einen Elektromotor.

Bei Elektromotoren sind aus dem Produktkatalog der Firma SEW-EURODRIVE GmbH & Co aus dem Jahre 1999 einerseits Ausführungen mit elektrisch betätigbarer Bremse bekannt und andererseits Ausführungen ohne eine solche Bremse. Es sind ebenfalls Elektromotoren bekannt, die einen Temperatursensor oder Temperaturfühler aufweisen, der wärmeleitend, also mit einem geringen Wärmeübergangswiderstand, mindestens an einen Wicklungsstrang des Stators angekoppelt ist.

Zur Verbindung der Leitungen, die von den Wicklungssträngen des Elektromotors in den Anschlusskasten führen, mit den Netzversorgungsleitungen wird oftmals ein sogenannter Klemmenstein verwendet. Dieser befindet sich im Anschlusskasten des Elektromotors und weist Klemmen auf, die von einem Träger mechanisch gehalten werden. An Klemmen werden die Leitungen des Elektromotors, also Ableitungen der Wicklungssträngen, und Leitungen der Netzversorgung befestigt. Auch bei Elektromotoren mit Bremse oder Temperatursensor werden die Leitungen an einem Klemmenstein oder einer entsprechenden Einheit elektrisch mit externen Leitungen verbunden. Nachteilig ist bei dieser Art der Verbindung, dass ein Austausch eines am Einsatzort sich befindenden Elektromotors sehr zeitaufwendig ist, da das Lösen und Verbinden sehr viel Zeit kostet.

Aus der Schrift 'Praxis der Antriebstechnik', Band 4, der Firma SEW-EURODRIVE GmbH & Co aus dem Jahre 1999 ist bekannt, dass in oder an den Anschlusskasten des Elektromotors elektronische Baugruppen anschließbar sind, die verschiedenen Funktionalitäten aufweisen. Insbesondere sind Schaltungen, wie Gleichrichter, bekannt, die aus einer Wechselspannung eine Gleichspannung zur Versorgung der Bremse erzeugen. Dabei sind Gleichrichter einfachster Bauart bekannt, die nur Dioden-Halbbrücken umfassen. Darüber hinaus sind aber auch Gleichrichter bekannt, die bei einem weiten Bereich von Netzspannung betreibbar sind und eine aufwendigere elektronische Schaltung, insbesondere elektronische Schalter umfassend, enthalten. Weiterhin sind Schaltungen oder als Optionen einsetzbare Baugruppen bekannt, die das Lüften und/oder Einfallen der Bremse beschleunigen. Dazu werden geteilte Bremsspulen eingesetzt und/oder elektronische Ansteuerungen der Bremse mittels elektronischer Schalter. Ferner werden auch Relais oder andere konventionelle Schalter zur Regulierung der Bremsenströme verwendet.

Eine Baureihe von Elektromotoren weist verschieden große Elektromotoren auf, die sich insbesondere in der Baugröße und Leistung, aber auch weiteren Merkmalen, unterscheiden. Innerhalb einer Baugröße weist eine Baureihe von Elektromotoren jedoch verschiedene Varianten auf. Insbesondere werden Elektromotoren in verschiedenen Grundvarianten, wie mit oder ohne Bremse und/oder mit oder ohne Temperaturfühler oder dergleichen, eingesetzt. Weitere Untervarianten werden bei verschiedenen Netzspannungen eingesetzt. Als wichtigstes Unterschiedskriterium sei hier das US-amerikanische und europäische Netzspannungssystem genannt. Außerdem gibt es Varianten, bei welchen die Bremse über einen Gleichrichter aus einem Wechselspannungsnetz versorgt wird. In anderen Fällen wird die Bremse aus einem Gleichspannungsnetz, insbesondere einem in Europa industrieüblichen 24V-Netz versorgt.

Für alle diese Varianten sind verschiedene elektronische Baugruppen zu fertigen. Aus der oben genannten Schrift sind elektronische Baugruppen zum Einbau in den Anschlusskasten bekannt. Für diese Baugruppen steht nur ein begrenzter Raumbereich zur Verfügung. Daher sind aus der genannten Schrift auch andere Baugruppen bekannt, die in Auslassungen des Gehäuses des Anschlusskastens einbaubar sind, wie eine Kabelverschraubung, PG-Verschraubung oder dergleichen.

Der Fertigungsaufwand solcher Baugruppen ist sehr groß und kostspielig. Außerdem ist der Einbau solcher Baugruppen in den Anschlusskasten zeitaufwendig und daher auch kostspielig.

Aus der DE 4216036 ist ein Motoranschlusskasten bekannt, der ein schnelles Austauschen eines Elektromotors am Einsatzort ermöglicht. Allerdings ist der Platzbedarf sehr groß, weshalb zusätzliche elektronische Baugruppen in den Anschlusskasten nur schwer einfügbar sind. In einigen Fällen muss daher auf Schaltschrankversionen ausgewichen werden. In diesen Fällen befinden sich die elektronischen Baugruppen im Schaltschrank und müssen mit langen Leitungen verbunden werden. Dies ist mit einem hohen Fertigungs- und Zeitaufwand und hohen Kosten verbunden.

Aus der DE 297 23 145 U1 ist ein Schaltgerät zum Schalten und Überwachen von elektrischen Motoren bekannt, und Schnittstelle vorgesehen, wobei das Schaltgerät auf einem Klemmenkasten 2 oder dem Motorgehäuse befestigt ist und die elektrischen Verbindungen zum Motor sind mittels Steckverbinder 3b, 4b verbunden. Auch die externe Netzzuleitung ist mittels Steckverbinder 12 schnell und einfach verbindbar. Nachteilig ist bei diesem Schaltgerät insbesondere, dass eine Integration in eine Baureihe von Elektromotoren mit variierenden Funktionalitäten bei den Varianten der Baureihe nicht vorgesehen ist.

Aus der EP 0 452 739 B2 ist ein europäisches Patent bekannt, das eine Baureihe von Getrieben betrifft.

Aus der EP 0 351272 A1 ist ein Elektromotor bekannt, der unterschiedlich bestückte Leiterplatten im Anschlusskasten aufweist.

Aus der EP 0575023 A1 ist eine Ansteuerschaltung für eine Bremse eines Elektromotors bekannt.

Der Erfindung liegt die Aufgabe zugrunde, einen Elektromotor weiterzubilden, der einfach und kostengünstig zu fertigen ist, insbesondere hinsichtlich der Gesamtkosten und Gesamtaufwandes bei der Herstellung.

Erfindungsgemäß wird die Aufgabe bei einem Elektromotor gelöst nach den in Anspruch 1 angegebenen Merkmalen.

Dabei führen elektrische Leitungen von Wicklungsstränge des Elektromotors, insbesondere von den Wicklungssträngen des Stators des Motors oder den Wicklungssträngen einer elektromagnetisch betätigbaren Bremse, zu ersten Anschlussvorrichtungen im Klemmenkasten, die mit zweiten Anschlussvorrichtungen elektrisch verbunden sind. Die zweiten Anschlussvorrichtungen sind dabei mit Leitungen lösbar verbindbar, die mindestens Netzversorgungsleitungen umfassen.

Ein wichtiges Merkmal der Erfindung ist, dass der Elektromotor mit Anschlusskasten ausgeführt ist, der eine Steckverbindereinheit umfasst,
wobei die Steckverbindereinheit eine Platine, erste Anschlussvorrichtungen und ein erstes, zweite Anschlussvorrichtungen umfassendes Steckverbinderteil umfasst, die mit den ersten Anschlussvorrichtungen elektrisch verbunden sind und die mit Leitungen lösbar verbindbar sind, die mindestens Netzversorgungsleitungen umfassen,
und wobei elektrische Leitungen von Wicklungssträngen des Elektromotors zu den ersten Anschlussvorrichtungen im Anschlusskasten führen und dort mittels einer lösbaren Verbindung, elektrisch mit elektrisch leitenden Teilen der Platine verbunden sind,
und wobei dieses erste Steckverbinderteil 6 derart aus dem Gehäuse des Anschlusskastens herausragt, dass ein zweites, mit Netzversorgungsleitungen verbundenes Steckverbinderteil mit dem ersten Steckverbinderteil lösbar verbindbar ist,
und wobei die ersten und zweiten Anschlussvorrichtungen elektrisch mit elektrisch leitenden Teilen der Platine , wie elektrische Verbindungen, Leiterbahnen, Layer, Pads, mittels Lötverbindung verbunden sind,
wobei der Anschlusskasten mindestens aus zwei Teilen, also mindestens aus einem ersten Teil, insbesondere Unterteil, und einem zweiten Teil, insbesondere Oberteil, aufgebaut ist,
und wobei die Platine elektronische Bauteile, also Widerstände, Kondensatoren, Halbleiterbauelemente, und Schalter und Jumper aufweist,
wobei die Platine ein unteres Steckverbinderteil innerhalb des Anschlusskastens aufweist, wobei das zweite Teil, insbesondere Oberteil, des Anschlusskastens ein entsprechendes passendes oberes Steckverbinderteil aufweist, und wobei der weitere Steckverbinder, bestehend aus unterem und oberem Steckverbinderteil, die einzige elektrische Verbindung zwischen zweitem Teil, insbesondere Oberteil, und erstem Teil, insbesondere Unterteil, des Anschlusskastens ist mit Ausnahme einer Masseverbindung
wobei das zweite Teil, insbesondere Oberteil, des Anschlusskastens eine elektronische Schaltung aufweist, die eine Signalelektronik und eine Leistungselektronik umfasst und elektrisch mit einem Feldbus verbindbar ist.

Von Vorteil ist dabei, dass zur Versorgungsseite hin mittels eines entsprechend passenden Steckverbinderteils eine schnell und einfach lösbare, elektrische und mechanische Verbindung mindestens der Versorgungsleitungen verfügbar ist. Zu Montage-, Reparaturzwecken oder dergleichen kann diese Verbindung in einfacher Weise im Feld gelöst und geschlossen werden. Ein weiteres wesentliches Merkmal der Erfindung ist, dass dieses erste Steckverbinderteil derart aus dem Gehäuse des Anschlusskastens herausragt, dass ein zweites Steckverbinderteil mit dem ersten Steckverbinderteil lösbar verbindbar ist, wobei Versorgungsleitungen, insbesondere auch Leitungen vom Netz her, zum zweiten Steckverbinderteil führen. Von Vorteil ist dabei, dass bei geschlossenem Anschlusskasten die genannte Verbindung des ersten zum zweiten Steckverbinderteils lösbar ist. Ein zeitaufwendiges Öffnen des Anschlusskastens ist daher nicht nötig.

Vorteiligerweise ist bei der Erfindung eine einfache übersichtliche Verkabelungsstruktur ermöglicht und es sind möglichst viele Teile eingespart und/oder innerhalb der Baureihe wiederverwendet und es kann eine besonders einfache Verkabelung gewährleistet werden.

Erfindungsgemäß sind die ersten Anschlussvorrichtungen auf einem Träger, also Platine, montiert und elektrisch mit diesem Träger verbunden, wobei der Träger elektrische Verbindungen, wie Leiterbahnen oder dergleichen, aufweist. Von Vorteil ist dabei, dass die ersten Anschlussvorrichtungen in räumlicher Entfernung von den die zweiten Anschlussvorrichtungen festlegbar sind.

Der Träger ist als Platine ausgebildet. Von Vorteil ist dabei, dass Platinen in Massenproduktion fertigbare kostengünstige Standard-Produkte sind.
Ein weiterer Vorteil ist dabei, dass die ersten und/oder zweiten Anschlussvorrichtungen mit dem Träger oder der Platine mittels einer Lötverbindung elektrisch verbunden sind

Erfindungsgemäß weist die Platine elektronische Bauteile, also Widerstände, Kondensatoren, Halbleiterbauelemente, auf. Von Vorteil ist dabei, dass bei einer vorteilhaften Ausgestaltung durch Bestückung verschiedene Betriebsarten oder Funktionen erzeugbar sind. Insbesondere sind durch verschiedene Bestückung verschiedene Spannungssysteme verwendbar. Auch ist bei verschiedenen Baugrößen, insbesondere auch wegen verschieden großer Bremsspulen, eine verschiedene Bestückung ausführbar.

Erfindungsgemäß führen die elektrischen Leitungen von Wicklungssträngen des Elektromotors, insbesondere den Wicklungssträngen des Stators des Motors oder den Wicklungssträngen einer elektromagnetisch betätigbaren Bremse, zu ersten Anschlussvorrichtungen im Anschlusskasten und sind mittels einer lösbaren Verbindung, wie Schraubanschluss, Käfigzugfederanschluss, Crimpanschluss oder dergleichen, elektrisch mit elektrisch leitenden Teilen oder Bestandteilen, wie Leiterbahnen auf einem Träger oder auf der Platine oder dergleichen, verbindbar. Von Vorteil ist dabei, dass einfache, kostengünstige und industrieübliche Verbindungstechniken verwendbar sind.

Bei einer weiteren vorteilhaften Ausgestaltung weist die Platine eine elektronische Schaltung zur Versorgung einer elektromagnetisch betätigbaren Bremse auf. Von Vorteil ist dabei, dass eine entsprechende elektronische Baugruppe nicht zusätzlich in den Anschlusskasten eingebracht und/oder eine solche Baugruppe verdrahtet werden muss. Die elektrischen Verbindungen werden schon bei der Herstellung und Bestückung der Platine in industrieüblicher Weise, wie durch ein Lötbad oder dergleichen, geschaffen. Des weiteren weist der Träger oder die Platine entsprechende elektrische Verbindungen von den ersten Anschlussvorrichtungen zu der elektronischen Schaltung für diejenigen Leitungen auf, die von der Bremse, insbesondere der zugehörigen Bremsspule, zu den ersten Anschlussvorrichtungen führen.

Bei einer weiteren vorteilhaften Ausgestaltung ist ein zusätzliches Gehäuse um die elektronische Schaltung herum ausgeführt. Von Vorteil ist dabei, dass eine elektrischen Isolation und/oder mechanisch stabile, insbesondere rüttelfeste, Verbindung der elektronischen Schaltung zum Anschlusskasten oder anderen Teilen hin ausführbar ist.

Bei einer weiteren vorteilhaften Ausgestaltung weist die Platine eine elektronische Schaltung zum Gleichrichten von Wechselspannung auf. Dabei sind Lösungen einsetzbar, die nur Dioden als Bauelemente verwenden, aber es sind auch Lösungen mit Kondensatoren zur Glättung der pulsierenden Gleichspannung einsetzbar. Von Vorteil ist dabei in allen genannten Fällen, dass die Bremsspule der Bremse mit Gleichspannung versorgbar ist, wobei dabei die Wechselspannung der Netzversorgungsspannung entnehmbar.

Erfindungsgemäß weist die Platine einen weiteren Steckverbinder innerhalb des Anschlusskastens auf, wobei das zweite Teil, insbesondere Oberteil, des Anschlusskastens einen entsprechenden Steckverbinder und eine elektronische Schaltung aufweist. Von Vorteil ist dabei, dass mittels des weiteren Steckverbinders elektrische Verbindungen zum zweiten Teil, insbesondere Oberteil, herstellbar sind und daher eine elektronische Baugruppe oder auch nur passive Einrichtungen, wie Anschlussvorrichtungen, im zweiten Teil, insbesondere Oberteil, elektrisch verbindbar sind mit der Platine, die sich im erstes Teil, insbesondere Unterteil, befindet.

Erfindungsgemäß weist das zweite Teil, insbesondere Oberteil, des Anschlusskastens Leistungselektronik auf und die Leistungselektronik ist mit dem zweiten Teil, insbesondere Oberteil, des Anschlusskastens wärmeleitend verbunden. Von Vorteil ist dabei, dass die Wärme der Leistungselektronik über das zweite Teil, insbesondere Oberteil, abführbar ist und eine Wärmesperre zwischen dem Wärmeniveau des Motors und dem zweites Teil, insbesondere Oberteil, einsetzbar ist.

Bei einer weiteren vorteilhaften Ausgestaltung ist die Leistungselektronik derart gestaltet und verdrahtet, dass sie den Sternpunkt des Elektromotors öffnen und schließen kann. Von Vorteil ist dabei, dass eine Motorschaltstufe realisierbar ist, die den Motor aus- und anschalten kann. In weiteren Ausgestaltungen sind auch Schaltstufen ausführbar, bei denen die Leistungselektronik den effektiven Spannungswert der am Motor anliegenden Spannung beeinflusst, wie mittels einer Phasenanschnittsteuerung bei Thyristoren oder dergleichen.

Erfindungsgemäß weist das zweite Teil, insbesondere Oberteil, weitere Signalelektronik auf. Von Vorteil ist dabei, dass die Leistungselektronik in komplexer Weise ansteuerbar ist und daher umfangreiche Ansteuerungslogik und/oder Steuer- und Regelungsverfahren anwendbar sind. Insbesondere bei einer Ausstattung der Signalelektronik mit Sensoren, wie Spannungs- und/oder Stromsensoren oder dergleichen, sind solche Verfahren in guter Qualität ausführbar. Bei einer weiteren vorteilhaften Ausgestaltung ist die Signalelektronik und die Leistungselektronik des zweiten Teil, insbesondere Oberteil, auch funktional einem Umrichter entsprechend ausführbar.

Bei einer weiteren vorteilhaften Ausgestaltung ist die weitere Signalelektronik und die Leistungselektronik derart gestaltet, dass sie funktional einer Motorschaltstufe mit SternDreieck-Umschaltung, Sanftanlauf oder Motorüberlastabschaltung oder dergleichen gleichwertig sind oder funktional einem Umrichter entsprechen. Von Vorteil ist dabei, dass komplexe Funktionen im Anschlusskasten integrierbar ist. Dabei ist sogar eine Positioniersteuerung integrierbar.

Erfindungsgemäß ist die weitere Signalelektronik elektrisch an ein Informationsübermittlungssystem, nämlich Feldbus, anschließbar. Von Vorteil ist dabei, dass ein Austausch von Daten, wie Ansteuerung, Fehlerrückmeldung oder dergleichen, ermöglicht wird. Insbesondere ist ein Elektromotor von einer zentralen Steuerung ein- oder ausschaltbar.

Erfindungsgemäß weist die Platine Schalter und Jumper auf. Von Vorteil ist dabei, dass ein Umschalten der Betriebsarten ermöglicht wird. Besonders wichtig ist dabei ein Umschalten der Betriebsart eines langsamen Bremseneinfalls auf die Betriebsart eines schnellen Bremseneinfalls. Dafür sind verschiedenen Techniken anwendbar. Insbesondere kann die Bremse abgeschaltet werden, indem ein Wechselstromkreis oder ein Gleichstromkreis aufgetrennt wird, wobei die Geschwindigkeit des Bremseneinfalls davon abhängig ist. Analoge Vorteile gelten in weiteren vorteilhaften Ausgestaltungen für das Lüften der Bremse.

Die Erfindung wird nun anhand von Abbildungen näher erläutert:
Figur 1 zeigt einen Elektromotor 20 mit Anschlusskasten als Ausführungsbeispiel, welches nicht von der Erfindung umfasst ist, aber zur besseren Erläuterung der Erfindung dient.
Figur 2 zeigt den Anschlusskasten, welcher nicht von der Erfindung umfasst ist, aber zur besseren Erläuterung der Erfindung dient.
Figur 3 zeigt den Anschlusskasten eines erfindungsgemäßen Elektromotors.
Figur 4 zeigt eine erfindungsgemäße Befestigungsmethode für eine im Anschlusskasten angeordnete Platine 8.
Figur 5 eine weitere Befestigungsmethode für eine im Anschlusskasten angeordnete Platine 8.
Figur 6 zeigt den Anschlusskasten, welcher nicht von der Erfindung umfasst ist, aber zur besseren Erläuterung der Erfindung dient.
Figur 7 zeigt den Anschlusskasten, welcher nicht von der Erfindung umfasst ist, aber zur besseren Erläuterung der Erfindung dient.
Figur 8 zeigt den Anschlusskasten, welcher nicht von der Erfindung umfasst ist, aber zur besseren Erläuterung der Erfindung dient.

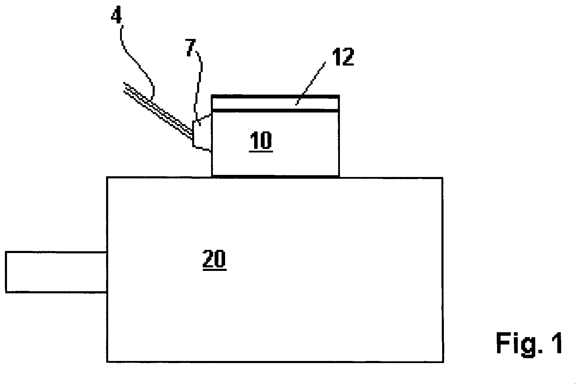

In der Figur 1 ist ein nicht erfindungsgemäßer Elektromotor 20 skizziert, der einen Anschlusskasten, umfassend ein erstes Teil 10, insbesondere Unterteil, des Anschlusskastens und ein zweites Teil 11, insbesondere Oberteil, des Anschlusskastens, aufweist. Leitungen 4, die mindestens Netzversorgungsleitungen umfassen, führen zum zweiten Steckverbinderteil 7 und werden mit diesem, auch elektrisch, lösbar verbunden.

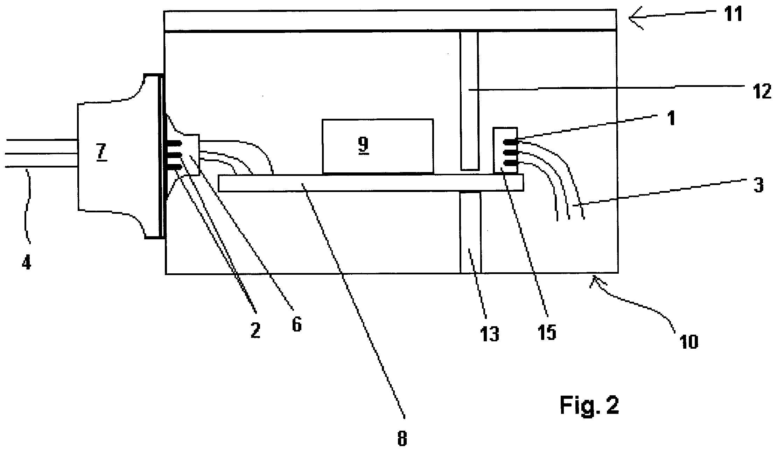

In der Figur 2 ist ein nicht erfindungsgemäßes Ausführungsbeispiel gezeigt. Elektrische Leitungen 3 von Wicklungssträngen des Elektromotors, wie Statorspulen und/oder je nach Ausführung Bremsspulen, Temperatursensoren oder dergleichen, führen zu ersten Anschlussvorrichtungen 1 des Elements 15, insbesondere Steckverbinderteil. Das zweite Steckverbinderteil 7 wird von außen auf das im Gehäuse des Anschlusskastens 10 eingebaute und dort befestigte erste Steckverbinderteil 6 zur Herstellung elektrischer Verbindungen aufgesteckt. Dieses erste Steckverbinderteil 6 umfasst zweite Anschlussvorrichtungen 2. Leitungen 4, die mindestens Netzversorgungsleitungen umfassen, führen zum zweiten Steckverbinderteil 7. Die zweiten Anschlussvorrichtungen 2 weisen elektrische Verbindungen zur Platine 8 auf. Dabei werden elektrische Leiter, die mit den zweiten Anschlussvorrichtungen verbunden sind, auf der Platine mittels Lötverbindungen mit elektrisch leitenden Flächen der Platine, also Leiterbahnen, Lauer, Pads oder dergleichen, verbunden. Insbesondere sind diese elektrischen Leiter beispielhaft derart gewählt, dass sie flexibel sind und auftretende Verspannungen zu kompensieren vermögen. Der Niederhalter 12 ist mit dem zweiten Teil 11, insbesondere Oberteil, des Anschlusskastens verbunden und drückt die Platine nieder, ohne Verspannungen zuzulassen. Seine Elastizität ist geeignet ausgelegt. Dabei liegt die Platine auf einer Auflage 13 zur Befestigung auf. Die ersten Anschlussvorrichtungen 1 sind in der Figur 2 derart zusammengefasst, dass sie in einem Element 15 mit ersten Anschlussvorrichtungen, insbesondere Steckverbinderteil, enthalten sind. Beispielhaft ist das Element 15 als Steckverbinderteil ausgeführt. Die elektrischen Leitungen 3 von Wicklungssträngen des Elektromotors werden dabei mit den ersten Anschlussvorrichtungen 1 des Steckverbinders, also beispielhaft des Elementes 15, verbunden und an sie angeschlossen, wobei der Steckverbinder auf die Platine 8 aufgesteckt und angelötet ist. In einem weiteren nicht erfindungsgemäßen Ausführungsbeispiel ist das Element 15 als auf die Platine 8 aufsteckbare und verlötbare Klemmenleiste ausgeführt. Dabei werden die elektrischen Leitungen 3 von Wicklungssträngen des Elektromotors in der Klemmenleiste befestigt, die wiederum elektrisch verbindbar mit Leiterbahnen der Platine 8 ist.

Die elektronische Schaltung 9 ist innerhalb der Baureihe jeweils verschieden ausgeführt. Die wichtigste Variable ist dabei die Baugröße oder Leistungsklasse. Falls es jedoch die Auslegungsdaten, wie Nenndaten oder dergleichen, zulassen, werden nach Möglichkeit innerhalb der Baureihe, möglichst auch über Baugrößen hinweg, die gleichen elektronischen Schaltungen 9, Platinen 8, Steckverbinder, Anschlussvorrichtungen oder dergleichen verwendet, um die Vielfalt der Teile und damit auch der Kosten zu reduzieren.

Jedoch kann die Ausführungsform auch innerhalb einer einzigen Baugröße variieren. Bei einem Elektromotor ohne Bremse und Temperaturfühler ist die elektronische Schaltung 9 nicht vorhanden, also werden auf der Platine 8 nur Verbindungen durchgeschleift, um die ersten Anschlussvorrichtungen 1 mit den zweiten Anschlussvorrichtungen 2 zu verbinden.

Bei anderen Vertretern innerhalb der Baureihe variiert die Ausführungsform weiter. Insbesondere bei einem Elektromotor mit Bremse ist die elektronische Schaltung verschieden ausführbar. Eine Ausführungsform weist einen Gleichrichter auf zur Versorgung der Bremse aus Netzspannung. Dabei wird diese Wechselspannung in Gleichspannung verwandelt. Die Gleichrichter sind auch innerhalb einer Baugröße verschieden. Insbesondere werden für verschieden hohe Spannungen oder Spannungsbereiche verschiedene Ausführungen gefertigt. Die Gleichrichter enthalten dabei nicht nur Dioden als Bauelemente sondern werden teilweise auch aufwendiger ausgeführt zur Erreichung eines möglichst weiten Bereiches von zulässigen Netz-Versorgungsspannungen für die Bremsspule. Auf diese Art und Weise müssen innerhalb einer Baugröße nicht viele verschiedenen Bremsspulen verwendet werden, sondern es reichen nur wenige, beispielsweise zwei, aus.

Des weiteren sind innerhalb einer Baugröße verschiedene elektronische Schaltungen einsetzbar, die weitere Optionen der Bremsansteuerung ermöglichen. Insbesondere sind derartige Optionen für ein schnelles Lüften und Einfallen der Bremse einsetzbar. Dazu werden jeweilige elektronische Schaltungen 9 mit entsprechender Funktionalität auf der Platine 8 eingesetzt.

In einer erfindungsgemäßen Ausführungsform wird in das zweite Teil 11, insbesondere Oberteil, Signalelektronik 33 und Leistungselektronik 34 eingefügt. Diese wird über einen weiteren Steckverbinder, der ein oberes Steckverbinderteil 31 und ein unteres Steckverbinderteil 32 umfasst, mit der Platine 8 verbunden. Dadurch ist ein einfaches Abmontieren des zweiten Teils 11, insbesondere Oberteil, des Anschlusskastens in einfacher Weise schnell möglich. Der Steckverbinder (31, 32) stellt, mit Ausnahme der Erdungsverbindung die einzige elektrische Verbindung vom zweiten Teil 11, insbesondere Oberteil, mit dem ersten Teil 10, insbesondere Unterteil, des Anschlusskasten dar.

In einer weiteren erfindungsgemäßen Ausführungsform wird eine Wärmesperre zur wärmetechnischen Abtrennung des zweiten Teils 11, insbesondere Oberteil, vom ersten Teil 10, insbesondere Unterteil, vorgesehen. Somit kann die Wärme der Leistungselektronik über das zweite Teil 10, insbesondere Oberteil, an die Umgebung abgeführt werden. Die Steuerelektronik der Signalelektronik 33 weist bei verschiedenen erfindungsgemäßen Ausführungsformen verschiedene Grade an Komplexität auf. Insbesondere ist eine einfache Motorschaltstufe, mittels welcher der Elektromotor ein- und ausschaltbar ist, realisierbar. Dieses Schalten kann am Sternpunkt bei einem sternförmig verschalteten Motor erfolgen, insbesondere mittels eines elektronischen Schalters. Das Schalten kann aber auch mittels Thyristoren erfolgen, die in einer Dreiphasen-Gleichrichter-Schaltung teilweise Dioden ersetzen, wobei die Dreiphasen-Gleichrichter-Schaltung wechselstromseitig mit den Phasen des Motors verbunden ist, gleichstromseitig kurzgeschlossen ist und somit der Sternpunkt des Motors je nach Zustand der Thyristoren kurzschließbar ist. Andererseits ist auch eine komplexere Elektronik einsetzbar. Insbesondere ein Sanftanlaufgerät. Dieses kann durch phasenanschnittgesteuerte Thyristoren oder dergleichen in der beschriebenen Schaltungsart erfolgen.

In einer nicht erfindungsgemäßen Ausführungsform wird statt eines Steckverbinders zur Verbindung des ersten Teils 10, insbesondere Unterteil, und des zweiten Teils 11, insbesondere Oberteil, des Anschlusskastens zumindest eine flexible Leitung ausgestaltet. Zu deren Anschluss weist die erfindungsgemäße Ausführungsform zumindest einen Steckverbinder am Ende der flexiblen Leitung am zweiten Teil 11 und/oder auf der Platine 8 auf.

Darüber hinaus ist bei einer weiteren erfindungsgemäßen Ausführungsform die Funktionalität eines Umrichters durch die elektronische Schaltung, umfassend die Signalelektronik 33 und die Leistungselektronik 34, ausbildbar.

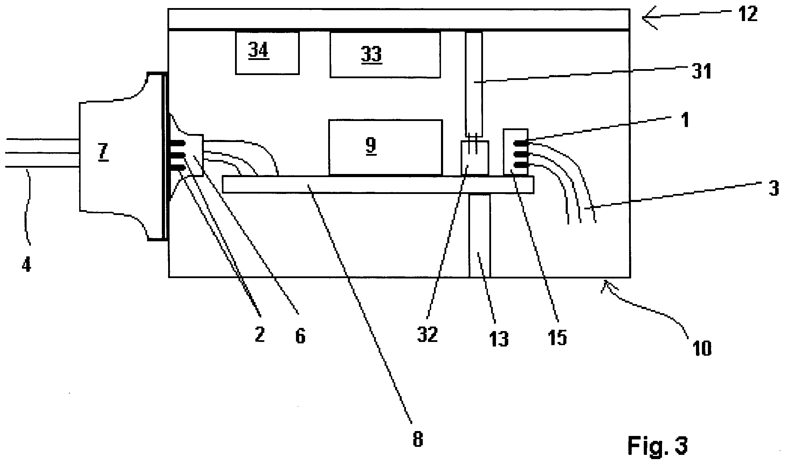

In der Figur 3 ist eine erfindungsgemäße Ausführungsform gezeigt. Dabei ist die einzige elektrische Verbindung mit Ausnahme der Masseverbindung zwischen zweitem Teil 11, insbesondere Oberteil, und erstem Teil 10, insbesondere Unterteil, des Anschlusskastens ein Steckverbinder, der ein oberes Steckverbinderteil 31 und ein unteres Steckverbinderteil 32 umfasst. Das zweite Teil 11, insbesondere Oberteil, trägt Signalelektronik 33 und Leistungselektronik 34. Die Signalelektronik 33 steuert auch die Leistungselektronik 34 an und ist in einem weiteren erfindungsgemäßen Ausführungsbeispiel mit einer Wärmesperre zur Leistungselektronik 34 und/oder zum Elektromotor oder zum ersten Teil 10, insbesondere Unterteil, des Anschlusskastens versehen.

Die Leistungselektronik 34 ist wärmeleitend mit dem zweiten Teil 11, insbesondere Oberteil, verbunden und gibt die Wärme über dieses an die Umgebung ab. Bei einem weiteren erfindungsgemäßen Ausführungsbeispiel ist die Leistungselektronik 34 mit einer Wärmesperre zur Signalelektronik 33 und/oder zum Elektromotor oder erstes Teil, insbesondere Unterteil, des Anschlusskastens versehen.

Bei den genannten Wärmesperren kann es sich um wärmeisolierende Bauteile, also Bauteile mit einem hohen Wärmeübergangswiderstand, handeln oder auch nur um beispielsweise einfache Kunststoffwände, die Raumluftbereiche trennen, wobei Raumluftbereiche mittels einer durch einen Lüfter bewirkten Luftströmung im Wesentlichen auf einem Temperaturniveau gehalten werden.

Die Funktionalität der aus Signalelektronik 33 und Leistungselektronik 34 gleicht einer Motorschaltstufe. Bei einem weiteren erfindungsgemäßen Ausführungsbeispiel gleicht sie einer Motorschaltstufe mit Sanftanlaufschaltung, bei einem wiederum weiteren einer Motorschaltstufe mit Umrichter-Funktionalität. Bei dem erfindungsgemäßen Ausführungsbeispiel weist sie Anschlussvorrichtungen für Feldbus auf und kann somit von einer zentralen Steuerung angesteuert werden und Daten austauschen, wie beispielsweise Fehlermeldungen.

In weiteren erfindungsgemäßen Ausführungsformen sind elektronische Bauteile innerhalb eines zusätzlichen speziellen Schutzgehäuses ähnlich wie in Figur 3 angeordnet. Zur Erhöhung der Rüttelfestigkeit wird bei einigen erfindungsgemäßen Ausführungsformen das Schutzgehäuse mit Vergussmasse ausgegossen.

In anderen erfindungsgemäßen Ausführungsformen wird der Anschlusskasten insgesamt oder zumindest teilweise dessen erstes Teil 10, insbesondere Unterteil, mit Vergussmasse ausgegossen zur Erhöhung der Rüttelfestigkeit.

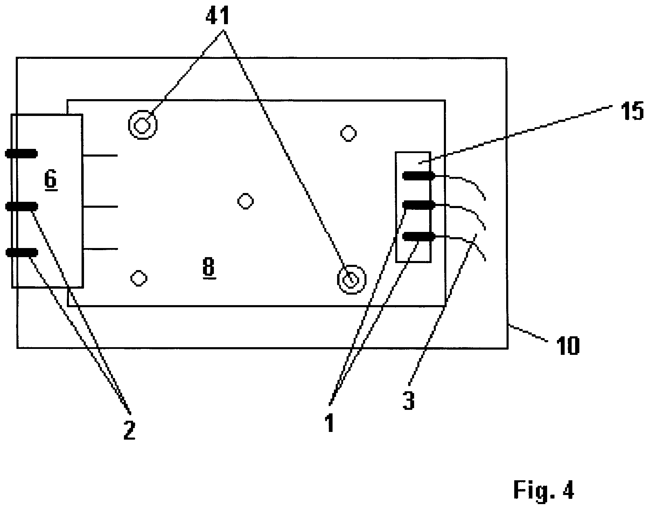

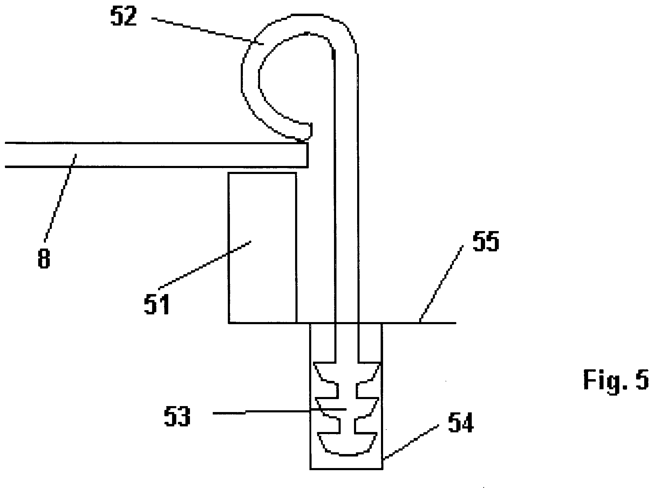

In der Figur 4 ist bei einer erfindungsgemäßen Ausführungsform eine beispielhafte Befestigungsmethode gezeigt. Die Platine 8, auf der das erste Steckverbinderteil 6, das zweite Anschlussvorrichtungen umfasst, und das Element 15, insbesondere Steckverbinderteil, mit ersten Anschlussvorrichtungen 1 montiert und mittels Lötverbindungen sind, ist mit dem ersten Teil, insbesondere Unterteil, des Anschlusskastens 10 mittels Befestigungselemente, insbesondere Befestigungsschrauben, lösbar verbunden. In der Figur 5 ist beispielhaft für eine erfindungsgemäße Ausführungsform ein weitere Art der Befestigungsmethode gezeigt. Dabei wird in eine Bohrung 54 des Bodens 55 des ersten Teils, insbesondere Unterteil, ein Element aus Kunststoff und/oder Metall gesteckt, das einen verformbarer Bereich 53 aufweist, der beim Einstecken in die Bohrung verquetscht wird und dadurch fixiert wird. In der Figur 5 ist ein zu großer Durchmesser symbolhaft verwendet und der verformbare Bereich 53 unverquetscht eingezeichnet. Zusätzlich weist das genannte Element eine elastische Klammer 52 auf. Beim Einstecken der Platine 8 nimmt die elastische Kraft der elastischen Klammer 52 von Null auf einen Maximalwert zu und kehrt bei weiterem Einstecken mit weiter zunehmendem Einsteckweg die Kraftrichtung um, der Kraftverlauf hat also einen Nulldurchgang. Das Einstecken der Platine 8 ist beendet, wenn die Platine 8 die Auflage 51 berührt.

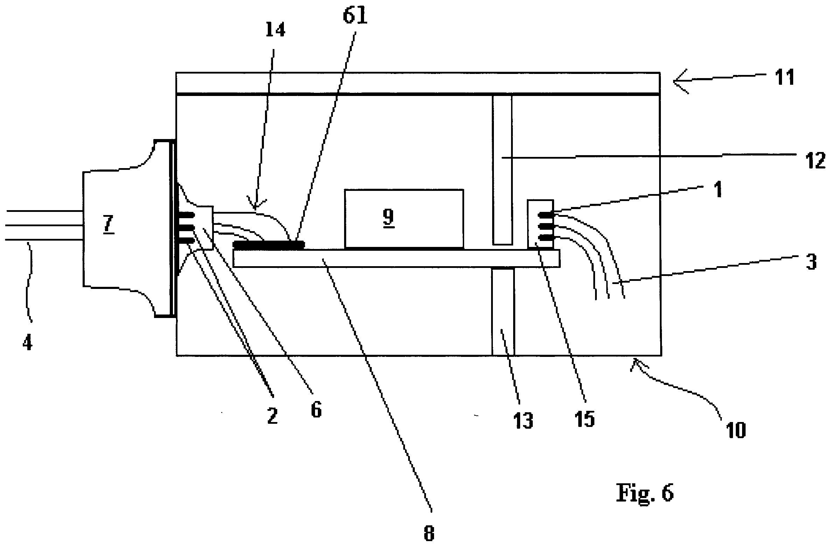

In der Figur 6 ist ein nicht erfindungsgemäßes Ausführungsbeispiel gezeigt, bei dem das erste Steckverbinderteil 6 über Verbindungsleitungen 14 und eine Steckverbindung 61 elektrisch mit der Platine 8 verbindbar ist. Bei einem solchen Ausführungsbeispiel sind die Verbindungsleitungen 14 flexibel ausgeführt. Somit ist das Steckverbinderteil 6 mechanisch im Wesentlichen entkoppelt von der Platine 8. Insbesondere statische Kräfte oder langweilige und/oder niedrigfrequente Schwingungen können nicht übertragen werden. Die Quelle der Schwingungen oder statischen Kräfte

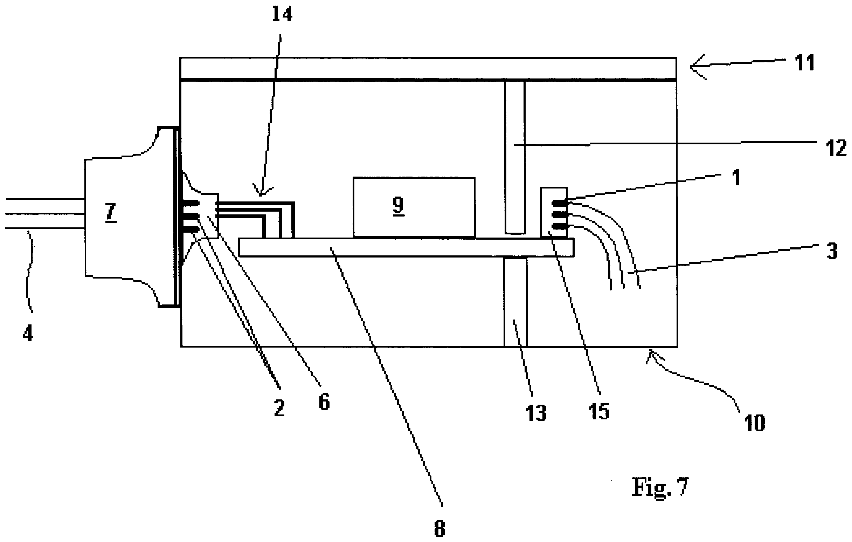

In der Figur 7 ist ein ähnliches nicht erfindungsgemäßes Ausführungsbeispiel gezeigt, bei dem die Verbindungsleitungen 14 aber als Stanzteile, die in sich verdreht sind, ausgeführt. Durch diese Verdrehung werden mechanische, langwellige und/oder niedrigfrequente Schwingungen und besonders statische Kräfte nicht oder nur derart geringfügig durchgeleitet, dass die keine zerstörende Wirkung für die Platine 8 mit Bauteilen oder für Lötverbindungen aufweisen.

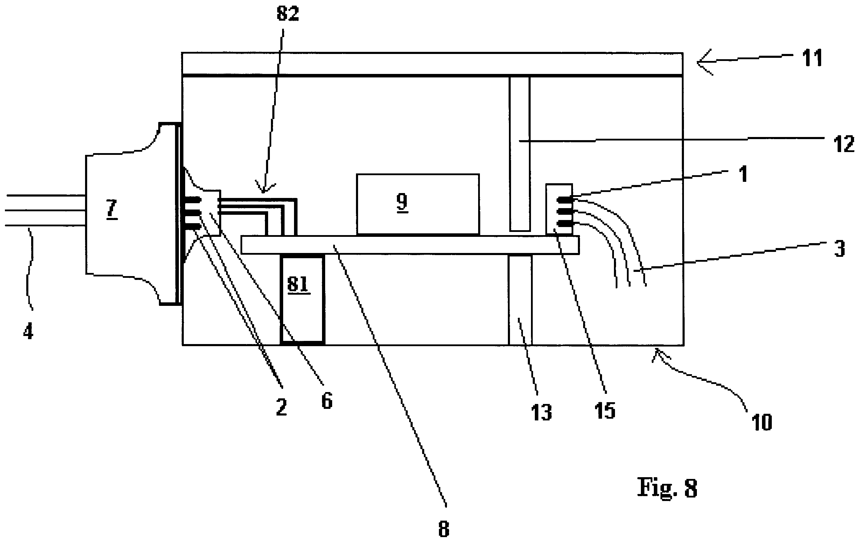

In der Figur 8 ist ein ähnliches nicht erfindungsgemäßes Ausführungsbeispiel gezeigt, bei dem die Verbindungsleitungen 82 starr ausgeführt sind und die Platine 8 auf Dämpfern 81 aufliegt. Dabei können zwar Schwingungen vom Steckverbinderteil 6 über die Verbindungsleitungen 14 auf die Platine 8 übertragen werden, die Platine 8 ist jedoch mittels der Dämpfer 81 derart entkoppelt, dass keine Zerstörungen von Lötverbindungen oder Bauteilen auftreten.

### Bezugszeichenliste

- 1: erste Anschlussvorrichtungen
- 2: zweite Anschlussvorrichtungen
- 3: elektrische Leitungen von Wicklungssträngen des Elektromotors
- 4: Leitungen, die mindestens Netzversorgungsleitungen umfassen
- 6: erstes Steckverbinderteil
- 7: zweites Steckverbinderteil
- 8: Platine
- 9: elektronische Schaltung
- 10: erstes Teil, insbesondere Unterteil, des Anschlusskastens
- 11: zweites Teil, insbesondere Oberteil, des Anschlusskastens
- 12: Niederhalter
- 13: Auflage zur Befestigung
- 14, 61, 82: Verbindungsleitungen
- 15: Element mit ersten Anschlussvorrichtungen, insbesondere Steckverbinderteil
- 20: Elektromotor
- 31: oberes Steckverbinderteil
- 32: unteres Steckverbinderteil
- 33: Signalelektronik
- 34: Leistungselektronik
- 41: Befestigungselemente, insbesondere Befestigungsschrauben
- 51: Auflage
- 52: elastische Klammer
- 53: verformbarer Bereich
- 54: Bohrung
- 55: Boden des ersten Teils, insbesondere Unterteil
- 61: Steckverbindung
- 81: Dämpfer

## Patentansprüche

1. Elektromotor mit Anschlusskasten, der eine Steckverbindereinheit umfasst,
wobei die Steckverbindereinheit eine Platine (8), erste Anschlussvorrichtungen (1) und ein erstes, zweite Anschlussvorrichtungen (2) umfassendes Steckverbinderteil (6) umfasst, die mit den ersten Anschlussvorrichtungen (1) elektrisch verbunden sind und die mit Leitungen (4) lösbar verbindbar sind, die mindestens Netzversorgungsleitungen umfassen,
und wobei elektrische Leitungen (3) von Wicklungssträngen des Elektromotors zu den ersten Anschlussvorrichtungen (1) im Anschlusskasten (10, 11) führen und dort mittels einer lösbaren Verbindung, elektrisch mit elektrisch leitenden Teilen der Platine (8) verbunden sind,
und wobei dieses erste Steckverbinderteil 6 derart aus dem Gehäuse des Anschlusskastens (10, 11) herausragt, dass ein zweites, mit Netzversorgungsleitungen verbundenes Steckverbinderteil (7) mit dem ersten Steckverbinderteil (6) lösbar verbindbar ist,
und wobei die ersten und zweiten Anschlussvorrichtungen (1,2) elektrisch mit elektrisch leitenden Teilen der Platine (8), wie elektrische Verbindungen, Leiterbahnen, Layer, Pads, mittels Lötverbindung verbunden sind,
wobei der Anschlusskasten (10, 11) mindestens aus zwei Teilen, also mindestens aus einem ersten Teil (10), insbesondere Unterteil, und einem zweiten Teil (11), insbesondere Oberteil, aufgebaut ist,
wobei die Platine (8) elektronische Bauteile, also Widerstände, Kondensatoren, Halbleiterbauelemente, und Schalter und Jumper aufweist,
wobei die Platine (8) ein unteres Steckverbinderteil innerhalb des Anschlusskastens (10,11) aufweist, wobei das zweite Teil (11), insbesondere Oberteil, des Anschlusskastens ein entsprechendes passendes oberes Steckverbinderteil (31) aufweist, und wobei der weitere Steckverbinder, bestehend aus unterem (32) und oberem (32) Steckverbinderteil, die einzige elektrische Verbindung zwischen zweitem Teil (11), insbesondere Oberteil, und erstem Teil (10), insbesondere Unterteil, des Anschlusskastens (10,11) ist mit Ausnahme einer Masseverbindung
wobei das zweite Teil (11), insbesondere Oberteil, des Anschlusskastens (10,11) eine elektronische Schaltung aufweist,
die eine Signalelektronik (33) und eine Leistungselektronik (34) umfasst und elektrisch mit einem Feldbus verbindbar ist.

## Claims

1. Electric motor with connection box which comprises a plug connector unit,
wherein the plug connector unit comprises a printed circuit board (8), first connection devices (1) and a first plug connector part (6) comprising second connection devices (2) which are electrically connected to the first connection devices (1) and which are releasably connectable to lines (4) which comprise at least mains supply lines,
and wherein electrical lines (3) lead from phase windings of the electric motor to the first connection devices (1) in the connection box (10, 11) and are electrically connected there to electrically conducting parts of the printed circuit board (8) by means of a releasable connection,
and wherein this first plug connector part 6 protrudes in such a manner from the housing of the connection box (10, 11) that a second plug connector part (7), connected to mains supply lines, is releasably connectable to the first plug connector part (6),
and wherein the first and second connection devices (1,2) are electrically connected to electrically conducting parts of the printed circuit board (8), such as electrical connections, conductor tracks, layers, pads, by means of a soldered connection,
wherein the connection box (10, 11) is constructed at least from two parts, that is, at least from a first part (10), in particular lower part, and a second part (11), in particular upper part,
wherein the printed circuit board (8) has electronic components, that is, resistors, capacitors, semiconductor components, and switches and jumpers,
wherein the printed circuit board (8) has a lower plug connector part inside the connection box (10, 11), wherein the second part (11), in particular upper part, of the connection box has a corresponding matching upper plug connector part (31), and wherein the further plug connector, consisting of lower (32) and upper (32)connector part, is the only electrical connection between second part (11), in particular upper part, and first part (10), in particular lower part, of the connection box (10, 11), with the exception of an earth connection,
wherein the second part (11), in particular upper part, of the connection box (10, 11) has an electronic circuit,
which comprises signal electronics (33) and power electronics (34) and is electrically connectable to a fieldbus.

## Revendications

1. Moteur électrique équipé d'une boîte de raccordement incluant une unité de connexion par enfichage,
ladite unité de connexion par enfichage comprenant une platine (8), des premiers dispositifs de raccordement (1) et une première partie (6) de connexion enfichable incluant des seconds dispositifs de raccordement (2) qui sont en liaison électrique avec lesdits premiers dispositifs de raccordement (1), et peuvent être connectés amoviblement à des conducteurs (4) englobant au moins des conducteurs d'alimentation de secteur,
des conducteurs électriques (3) partant de faisceaux de bobinage dudit moteur électrique et gagnant les premiers dispositifs de raccordement (1) dans la boîte de raccordement (10, 11) dans laquelle ils sont en liaison électrique, au moyen d'une connexion libérable, avec des parties électriquement conductrices de la platine (8),
cette première partie 6 de connexion enfichable étant en saillie au-delà du coffret de la boîte de raccordement (10, 11), de façon telle qu'une seconde partie (7) de connexion enfichable, raccordée à des conducteurs d'alimentation de secteur, puisse être reliée amoviblement à ladite première partie (6) de connexion enfichable,
les premiers et seconds dispositifs de raccordement (1, 2) étant en liaison électrique, au moyen d'une jonction brasée, avec des parties électriquement conductrices de la platine (8) telles que des connexions électriques, des pistes conductrices, des couches, des tampons,
la boîte de raccordement (10, 11) étant structurellement agencée en au moins deux parties, c'est-à-dire au moins en une première partie (10) constituant notamment une partie inférieure, et en une seconde partie (11) constituant notamment une partie supérieure,
la platine (8) présentant des composants électroniques, c'est-à-dire des résistances, des condensateurs, des composants semi-conducteurs, des commutateurs et des cavaliers, ladite platine (8) comportant une partie inférieure de connexion enfichable à l'intérieur de la boîte de raccordement (10, 11), la seconde partie (11), notamment la partie supérieure de ladite boîte de raccordement étant munie d'une partie supérieure (31) de connexion enfichable, correspondante et adaptée, et le connecteur enfichable supplémentaire, composé de parties inférieure (32) et supérieure (32) de connexion enfichable, instaurant l'unique liaison électrique entre la seconde partie (11) constituant notamment la partie supérieure, et la première partie (10) constituant notamment la partie inférieure de ladite boîte de raccordement (10, 11), à l'exception d'une mise à la masse,
ladite seconde partie (11), constituant notamment la partie supérieure de ladite boîte de raccordement (10, 11), étant pourvue d'un circuit électronique
qui inclut une électronique de signalisation (33) et une électronique de puissance (34), et peut être mis en liaison électrique avec un bus de terrain ou de champ.
